(19) Europäisches Patentamt
European Patent Office
Office européen des brevets

(11) EP 2 145 776 B1

(12) **EUROPEAN PATENT SPECIFICATION**

(45) Date of publication and mention of the grant of the patent:
**23.01.2013 Bulletin 2013/04**

(21) Application number: **08740094.1**

(22) Date of filing: **09.04.2008**

(51) Int Cl.:
***B60C 9/00*** *(2006.01)* ***B60C 9/04*** *(2006.01)*
***B60C 17/00*** *(2006.01)* ***D02G 3/48*** *(2006.01)*

(86) International application number:
**PCT/JP2008/056991**

(87) International publication number:
**WO 2008/126853 (23.10.2008 Gazette 2008/43)**

(54) **RUN-FLAT TIRE**

RUN-FLAT-REIFEN

PNEU ANTI-CREVAISON

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.04.2007 JP 2007101891**
**09.04.2007 JP 2007101892**
**25.04.2007 JP 2007116087**

(43) Date of publication of application:
**20.01.2010 Bulletin 2010/03**

(73) Proprietor: **Bridgestone Corporation**
**Tokyo 104-8340 (JP)**

(72) Inventors:
- **YAMAGUCHI, Masahiro**
**Kodaira-shi**
**Tokyo 187-0031 (JP)**
- **YOKOKURA, Hiroyuki**
**Kodaira-shi**
**Tokyo 187-0031 (JP)**
- **ZUIGYO, Yugo**
**Kodaira-shi**
**Tokyo 187-0031 (JP)**

(74) Representative: **Waldren, Robin Michael et al**
**Marks & Clerk LLP**
**90 Long Acre**
**London**
**WC2E 9RA (GB)**

(56) References cited:
**WO-A1-2003/011615**
**WO-A1-2006/077973**
**WO-A1-2007/122984**
**JP-A- 05 208 458**
**JP-A- 63 038 006**
**JP-A- 2003 049 339**
**JP-A- 2004 142 425**
**JP-A- 2006 306 260**
**JP-A- 2007 230 405**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical Field

The present invention relates to a run-flat tire, particularly to a side reinforcing type run-flat tire in which the durability during run-flat traveling is improved drastically without deteriorating the ride quality during normal traveling.

Background Art

As a so-called run-flat tire with which a vehicle can travel some amount of distance in safety without losing the tire's load-supporting ability even in the state that the inner pressure of the tire is decreased due to a puncture or the like, a variety of side reinforcing type run-flat tires such as a tire in which a side reinforcing rubber layer having a relatively high modulus and having a crescent-shaped cross-section is located inside the carcass in the side wall portion of the tire to increase the rigidity of the side wall portion thereby enabling the tire to bear a load without extremely increasing the deformation of the side wall portion of the tire at the time when the inner pressure is decreased, a tire the side wall portion of which is reinforced with a variety of reinforcing members, and the like have been proposed (See Patent Documents 1 to 4).

On the other hand, because cellulosic fibers such as rayon have a high modulus at room temperature and a high adhesiveness to rubber, they have been used as a reinforcement for a variety of rubber goods including a reinforcing cord for tires. In addition, the cellulosic fiber has a higher Young's modulus at room temperature and at a high temperature than polyesters such as polyethylene terephthalate (PET), and has a high thermal dimensional stability such that the heat shrinkage at a temperature of 177°C is 0.65 to 1.0%. Therefore, the cellulosic fiber has also been used for a reinforcing cord for the carcass of the above-described side reinforcing type run-flat tire.

However, as for a conventional side reinforcing type run-flat tire using a cellulosic fiber cord such as rayon as a reinforcing cord for the carcass, the deformation of the tire during run-flat traveling is large because the modulus of elasticity of the cellulosic fiber is not sufficiently high, and the deformation of the tire is still larger when the temperature of the tire becomes high due to run-flat traveling because the rigidity of a carcass ply decreases. Thus, the main cause of failure of the tire at the end phase of run-flat travel is a fracture in the side reinforcing rubber layer having the above-described crescent-shaped cross-section, and there has been a problem for conventional side reinforcing type run-flat tires in that the durable distance of the run-flat traveling is short.

On the other hand, there is a problem that ride quality during normal traveling deteriorates when the side wall portion is reinforced, for example, by thickening the gauge of the side reinforcing rubber layer in order for the tire to prolong the durable distance during run-flat traveling because the weight of the tire increases or a vertical stiffness of the tire during normal traveling increases.

In order to overcome such a problem, the present inventors have previously reported in Patent Document 5 that the deformation of the tire during run-flat traveling may be controlled without increasing the weight of the tire by employing a polyketone fiber cord having a specific heat shrinkage force and modulus of elasticity as a reinforcing cord of the carcass of the side reinforcing type run-flat tire, therefore a run-flat durability of the tire may be improved drastically without deteriorating the ride quality during normal traveling.

Patent Document 1: Japanese Unexamined Patent Application Publication No.2000-264012
Patent Document 2: Japanese Unexamined Patent Application Publication (Translation of PCT Application) No. 2002-500587
Patent Document 3: Japanese Unexamined Patent Application Publication (Translation of PCT Application) No. 2002-500589
Patent Document 4: Japanese Unexamined Patent Application Publication No.2004-306658
Patent Document 5: Japanese Unexamined Patent Application Publication No.2006-224952

EP 1557299 describes a known sun-flat tine. JP 2004 142426 describes a known manufacturing method for rubber-attached fabric for a tire.

Disclosure of the Invention

Problem to be Solved by the Invention

As for the run-flat tire described in Patent Document 5, the run-flat durability of the tire may have been improved drastically without deteriorating the ride quality during normal traveling, though, the side reinforcing type run-flat tire has had a problem that the uniformity of the tire deteriorates more than that of a conventional tire because the vertical stiffness

of the side reinforcing type run-flat tire during normal traveling is large.

Therefore, an object of the present invention is to overcome the problem of the above-described conventional art, thereby providing a run-flat tire in which the tire uniformity is improved, as well as the durability during run-flat traveling may be improved drastically without deteriorating the ride quality during normal traveling.

Means for Solving the Problem

To attain the above-described object, the present inventors intensively studied to discover that the deformation of the tire during run-flat traveling may be controlled without increasing the weight of the tire by employing organic fiber cords mainly including a polyketone fiber having physical properties such as a specific heat shrinkage force and the like as a reinforcing cord of the carcass of the side reinforcing type run-flat tire and, in addition, cutting the weft which crosses the reinforcing cord of the carcass at a plurality of points along the tire circumferential direction at a specified cutting pitch, therefore while a run-flat durability of the tire may be improved drastically without deteriorating the ride quality during normal traveling, homogeneity along the tire circumferential direction may be improved and deterioration of uniformity may be controlled, thereby completing the present invention.

That is, the run-flat tire of the present invention is a run-flat tire according to claim 1.

In the run-flat tire of the present invention, the end count of the polyketone fiber cords at the bead portion of the carcass ply is preferably in a range of 70 to 120 cords / 100 mm, and the end count of the weft is preferably in a range of 3 to 20 cords / 100 mm. Further, the cord diameter of D1 of the carcass ply cord is preferably in a range of 0.45 to 0.95 mm, and the diameter D2 of the weft is preferably in a range of 0.1 to 0.3 mm. Still further, as a polyketone fiber included in the fiber cord which forms the carcass ply, the tensile strength of the original yarn is preferably not less than 10 cN/dtex and the modulus of elasticity of the yarn is preferably not less than 60 cN/dtex, as well as the breaking elongation of the weft is 5 to 20% and the breaking strength of the weft is in a range of 200 to 1000 g. Still further, the weft is preferably composed of cellulosic fibers or vinylon fibers, and the weft is preferably spun yarn.

As used herein, the "heat shrinkage force" of the cord refers to the maximum force (unit: cN/dtex) generated in the cord at a temperature of 177°C, in which cord a 25 cm of fixed length sample of the carcass ply cord before vulcanization subjected to a general dipping process is heated at a rate of temperature rise of 5°C / min. The heat shrinkage rate of the polyketone fiber in a dry heat treatment is a value obtained by measuring the lengths of the fiber while applying a 1/30 (cN/dtex) of load before and after a heat treatment which is a dry heat treatment in an oven at a temperature of 150°C for 30 minutes and applying the measured values to the following equation:

$$\text{Heat Shrinkage Rate (\%) in a dry heat treatment} = \{(Lb - La) / Lb\} \times 100,$$

where Lb is the length of the fiber before the heat treatment, and La is the length of the fiber after the heat treatment. The tensile strength and the tensile modulus of elasticity of the polyketone fiber are the values obtained by performing measurements in accordance with JIS-L-1013, and the tensile modulus of elasticity of the polyketone fiber is a value of the initial modulus of elasticity calculated by a load at an elongation of 0.1% and a load at an elongation of 0.2%.

Effects of the Invention

The present invention may provide a run-flat tire in which the tire uniformity is improved, as well as the durability during run-flat traveling may be improved drastically without deteriorating the ride quality during normal traveling.

Brief Description of the Drawings

Fig. 1 illustrates a cross-section of the right half of one example of the pneumatic tire of the present invention.
Fig. 2 illustrates a cross-section of a portion of a carcass ply in which portion carcass cords and wefts which cross the carcass cords are included.

Reference Numerals

| | |
|---|---|
| 1 | bead portion |
| 2 | side wall portion |
| 3 | tread portion |
| 4 | radial carcass |
| 5 | side reinforcing rubber layer |
| 6 | bead core |
| 7 | bead filler |
| 8 | belt |
| 9A, 9B | reinforcing layer |
| 10 | carcass ply cord |
| 11 | weft |
| A | cut pitch of weft |

Best Mode for Carrying out the Invention

In the following, the present invention will be described in detail referring to the drawings. Fig. 1 is a partial cross section of one example of the run-flat tire of the present invention. The tire shown in Fig. 1 has a left-and-right pair of bead portions 1, a pair of side wall portions 2 and a tread portion 3 connecting to both the side wall portions 2, and extends toroidally between the pair of bead portions 1, as well as the tire comprises a radial carcass 4 composed of one or more carcass plies which reinforce each of portions 1, 2 and 3, and comprises a pair of side reinforcing rubber layers 5 having a crescent-shaped cross section arranged inside of the radial carcass 4 in the side wall portions 2.

In the example of the tire illustrated in the drawing, a bead filler 7 is placed at the outside, in the tire radial direction, of a ring-shaped bead core 6 each embedded in the bead portion 1. In addition to that a belt 8 composed of two sheets of belt layers is placed at the outside, in the tire radial direction, of the crown portion of the radial carcass 4, a belt reinforcing layer 9A is placed such that the layer covers the whole of the belt 8 at the outside, in the tire radial direction, of the belt 8. Further, a pair of belt reinforcing layers 9B are placed such that the layers cover only both ends of the belt reinforcing layer 9A. In this case, the belt layer is normally composed of a rubberized layer comprising cords, preferably a rubberized layer comprising steel cords, the cords extending in a direction having an inclination relative to the tire equatorial plane. The two belt layers are piled such that the cords which constitute the belt layers cross each other across the equatorial plane to constitute the belt 8. The belt reinforcing layers 9A and 9B are usually composed of a rubberized layer comprising cords arranged substantially parallel to the tire circumferential direction.

The radial carcass 4 in the example illustrated in the drawing is constituted by one sheet of carcass ply which is a plurality of reinforcing cords arranged parallel to each other covered with a coating rubber, and the radial carcass 4 is composed of a main body which extends toroidally between a pair of bead cores 6 embedded in each of the above-described bead portions 1, and a pair of turn-up portions where the carcass curls up around each of bead cores 6 from the inside to the outside of the tire width direction and outward in the radial direction. The number of plies and structure of the radial carcass 4 in the pneumatic tire of the present invention are not limited thereto. The belt 8 in the example illustrated in the drawing is composed of two sheets of the belt layers, though in the pneumatic tire of the present invention the number of sheets of the belt layers which constitute the belt 8 is not limited thereto. In the pneumatic tire of the present invention, the belt reinforcing layers 9A and 9B are not necessarily installed, and a belt reinforcing layer having another structure may also be installed.

In the present invention, it is preferred that at least 50%, preferably 70%, and more preferably 100% by mass of polyketone fibers is included in a carcass ply cord of the radial carcass 4. When polyketone fiber included in the carcass ply cord is less than 50% by mass, any one of the performances that are the strength of the tire, the heat resistance of the tire and the adhesiveness with the rubber are insufficient.

Further, it is preferred that a carcass ply cord of the radial carcass 4 has a heat shrinkage stress in a range of 0.1 to 1.8 cN/dtex, more preferably 0.4 to 1.6 cN/dtex, still more preferably 0.6 to 1.4 cN/dtex. When the heat shrinkage force of the carcass ply cord is less than 0.1 cN/dtex, run-flat traveling durability may not be improved enough. On the other hand, when the heat shrinkage force of the carcass ply cord is more than 1.8 cN/dtex, it is feared that the shape of the finished tire deteriorates because the cord shrinks significantly due to the application of heat during the production of the tire.

Further, it is preferred that polyketone fiber included in the carcass ply cord of the radial carcass 4 has a heat shrinkage rate in a range of 0.3 to 6.5%, preferably 0.3 to 3% in a dry heat treatment at a temperature of 150°C for 30 minutes. When the heat shrinkage rate in the dry heat treatment at a temperature of 150°C for 30 minutes is less than 0.3%, the paralleling efficiency due to the application of heat during the production of the tire decreases significantly, resulting in insufficient strength of the tire. On the other hand, when the heat shrinkage rate in the dry heat treatment at a temperature of 150°C for 30 minutes is more than 6.5%, it is feared that the shape of the finished tire deteriorates because the cord shrinks significantly due to the application of heat during the production of the tire.

Still further, as shown in Fig. 2, the carcass ply includes a weft 11 which crosses carcass ply cord 10 arranged approximately in the radial direction, and the weft is cut at a plurality of points at regular intervals along the tire circumferential direction. The weft 11 preferably has an end count in a range of 3 to 20 cords / 100 mm. When the end count is less than 3 cords / 100 mm, deterioration of the properties of a woven screen fabric is caused, thus the homogeneity in the tire circumferential direction may not be sufficiently improved. On the other hand, it is not preferred that the end count is more than 20 cords / 100 mm because the weft 11 is hard to cut. As a means of cutting the weft 11, a conventional method described in, for example, Japanese Unexamined Patent Application Publication No.H05-208458 may be employed, and naturally, the other methods may also be employed to cut the weft.

Still further, the bead portion of the carcass ply preferably has an end count of the carcass ply cord in a range of 70 to 120 cords / 100 mm, more preferably in a range of 85 to 110 cords / 100 mm. When the end count is less than 70 cords / 100 mm, the homogeneity in the tire circumferential direction may not be sufficiently improved. On the other hand, it is feared that the carcass cord may suffer damage during a weft cutting process when the end count is more than 120 cords / 100 mm.

Still further, the cord diameter D1 of the carcass ply cord of the radial carcass 4 is preferably in a range of 0.45 to 0.95 mm. When the cord diameter D1 is less than 0.45 mm, it is feared that the carcass cord may suffer damage during the weft cutting process. On the other hand, when the cord diameter D1 is more than 0.95 mm, deterioration of the properties of a woven screen fabric is caused, thus the homogeneity in the tire circumferential direction may not be sufficiently improved.

Still further, the diameter D2 of the weft 11 is preferably in a range of 0.1 to 0.3 mm. When the diameter D2 is less than 0.1 mm, the weft 11 is cut unexpectedly before a process that a rubber is topped, thus the shape as a woven screen fabric may not be maintained. On the other hand, when the cord diameter D2 of the weft 11 is more than 0.3 mm, deterioration of the properties of a woven screen fabric is caused, thus the homogeneity in the tire circumferential direction may not be sufficiently improved.

Still further, as shown in Fig. 2, the cut pitch A of the weft 11 is preferably in a range of 5.5 to 60 times, more preferably in a range of 8 to 24 times the cord diameter D1. When the cut pitch A is less than 5.5 times the cord diameter D1, it is feared that the carcass cord may suffer damage during the cutting process. On the other hand, the cut pitch A is more than 60 times the cord diameter D1, the homogeneity in the tire circumferential direction may not be sufficiently improved.

Still further, polyketone fiber included in the carcass ply cord of the radial carcass 4 preferably has a tensile strength of not less than 10 cN/dtex, more preferably not less than 15 cN/dtex. When the tensile strength is less than 10 cN/dtex, the strength of the tire is insufficient.

Still further, polyketone fiber included in the carcass ply cord of the radial carcass 4 preferably has a modulus of elasticity of not less than 60 cN/dtex, more preferably not less than 80 cN/dtex. When the modulus of elasticity is less than 60 cN/dtex, a run-flat traveling durability may not be improved sufficiently.

Still further, the weft 11 preferably has a breaking elongation of 5 to 20% and a breaking strength in a range of 200 to 1000 g. When the breaking elongation is less than 5% or the breaking strength is less than 200 g, the weft 11 is cut unexpectedly before the process that a rubber is topped, thus the shape as a woven screen fabric may not be maintained. On the other hand, when the breaking elongation is more than 20% or the breaking strength is more than 1000 g, the weft 11 is hard to cut during the cutting process, thus the homogeneity in the tire circumferential direction may not be sufficiently improved.

Still further, the weft 11 is preferably composed of cellulosic fibers or vinylon fibers, and is still preferably a spun yarn. Such fibers may be designed such that the fibers satisfy the above-described conditions of the breaking elongation and the breaking strength.

Next, a carcass ply cord including not less than 50% by mass of polyketone fibers (hereinafter, referred to as "PK fiber") which may be used in the present invention will be described in detail.

Examples of fiber which may be used in the present invention other than PK fiber include nylons, polyesters, rayons, polynosic, lyocell, vinylons and the like.

The above-described cord preferably also has a twist coefficient $\alpha$ represented by the following formula (I):

$$\alpha = T \times \sqrt{0.126 \times D / \rho} \times 10^{-3} \qquad (I)$$

[where T is the number of twist (turn / 100 mm), D is total fineness (dtex) of the cord and $\rho$ is a density (g/cm$^3$) of the fiber material which is used for the cord] in a range of 0.25 to 1.25. When the twist coefficient $\alpha$ of the PK fiber cord is less than 0.25, heat shrinkage force may not be secured sufficiently. Whereas, when the twist coefficient $\alpha$ is more than 1.25, the modulus of elasticity may not be secured sufficiently, thus, the reinforcing ability decreases.

As a polyketone which is a raw material of the above-described PK fiber, the one which is substantially composed of repeating units represented by the following general formula (II) :

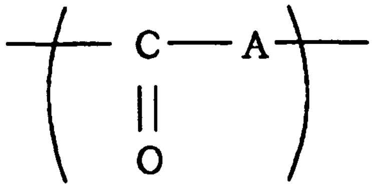

(II)

[where A is a portion derived from an unsaturated compound polymerized by an unsaturated bond, and may be the same or different in each repeating unit] is preferred. Among these, a polyketone which has 97% of 1-oxotrimethylene [$-CH_2-CH_2-CO-$] by mole of all of the repeating units is preferred, a polyketone which has 99% of 1-oxotrimethylene by mole of all of the repeating units is more preferred, and a polyketone which has 100% of 1-oxotrimethylene by mole of all of the repeating units is most preferred.

In such a polyketone, ketone groups and portions derived from unsaturated compounds may be partially combined among themselves, and the rate of portions in which a portion derived from an unsaturated compound and a ketone group are arranged alternately is preferably 90% by mass, more preferably 97% by mass and most preferably 100% by mass.

In the above-described formula (II), as an unsaturated compound which forms A, ethylene is most preferred, though, unsaturated hydrocarbons other than ethylene, such as propylene, butene, pentene, cyclopentene, hexene, cyclohexene, heptene, octene, nonene, decene, dodecene, styrene, acetylene and allene; compounds including unsaturated bonds, such as methyl acrylate, methyl methacrylate, vinyl acetate, acrylamide, hydroxyethyl methacrylate, undecenoic acid, undecenol, 6-chlorohexene, N-vinyl pyrrolidone, diethyl ester of sulnyl phosphonic acid, sodium styrenesulfonate, sodium allylsulfonate, vinyl pyrrolidone, and vinyl chloride; and the like are also preferred.

The degree of polymerization of the above-described polyketone is preferably such that the intrinsic viscosity [η] represented by the following formula (III):

$$[\eta] = \lim_{c \to 0} \frac{(T - t)}{(t \cdot c)} \qquad \text{(III)}$$

[in the above-described formula, t and T are respectively a flowing through period of viscosity tube of a hexafluoroisopropanol with not less than 98% purity and a dilution of polyketone dissolved in the hexafluoroisopropanol at a temperature of 25°C, and c is mass(g) of solute in 100 mL of the above-described dilution] is in a range of 1 to 20 dL/g, more preferably 3 to 8 dL/g. When the intrinsic viscosity is less than 1 dL/g, the molecular weight is so small that it is hard to obtain a high strength polyketone fiber cord and troubles in the course of the step such as napping and breaking during spinning, drying and drawing may occur frequently. Whereas, when the intrinsic viscosity is more than 20 dL/g, it takes time and cost to synthesize a polymer and it is hard to dissolve the polymer uniformly, thereby adversely affecting spinnability and physical properties in some cases.

Still further, the PK fiber preferably has a crystal structure which has a crystallinity of 50 to 90% and a degree of crystalline orientation of not less than 95%. When the crystallinity is less than 50%, it is feared not only that sufficient strength of the fiber be not obtained due to insufficiency of the structure formation of the fiber, but also that the shrinkage characteristics and dimensional stability of the fiber during heating be not stable. Therefore, the crystallinity is preferably 50 to 90%, more preferably 60 to 85%.

As a method of producing the above-described polyketone fiber, (1) a method comprising the steps of spinning an undrawn yarn and subjecting to a multi-stage heat drawing in which a final drawing at the multi-stage heat drawing step is carried out at a specified temperature and drawing ratio, and (2) a method comprising the steps of spinning an undrawn yarn, subjecting to heat drawing and then quenching the fiber after heat drawing under a high tension are preferable. By forming the polyketone fiber through the method (1) or (2), desirable filaments suitable for the production of the above-described polyketone fiber cord may be obtained.

A method of spinning the undrawn yarn of the above-described polyketone is not particularly restricted, but conventionally known methods may be adopted. Specifically, mention may be made of a wet spinning method using an organic solvent such as hexafluoroisopropanol or m-cresol as described in Japanese Unexamined Patent Application Publication No. H02-112413, Japanese Unexamined Patent Application Publication No. H04-228613 and Japanese

Unexamined Patent Application Publication (Translation of PCT Application) No. H04-505344, and a wet spinning method using an aqueous solution such as zinc salt, calcium salt, thiocyanate, or iron salt as described in WO99/18143, WO00/09611, Japanese Unexamined Patent Application Publication No. 2001-164422, Japanese Unexamined Patent Application Publication No. 2004-218189 and Japanese Unexamined Patent Application Publication No. 2004-285221. Among these, the wet spinning method using the aqueous solution of the above-described salts is preferred.

For example, in the wet spinning method using the organic solvent, a polyketone polymer is dissolved in hexafluoroisopropanol, m-cresol or the like at a concentration of 0.25 to 20% by mass and extruded through a spinning nozzle to form a fiber, and then, the solvent is removed in a non-solvent bath such as toluene, ethanol, isopropanol, n-hexane, isooctane, acetone, or methyl ethyl ketone bath, whereby the polyketone undrawn fiber may be obtained after washing.

On the other hand, in the wet spinning method using the aqueous solution, the polyketone polymer is dissolved in an aqueous solution such as zinc salt, calcium salt, thiocyanate, or iron salt at a concentration of 2 to 30% by mass and extruded from a spinning nozzle into a coagulation bath at 50 to 130°C to conduct gel spinning and then desalted and dried to obtain the undrawn polyketone yarn. In the aqueous solution dissolving the polyketone polymer, it is preferable to use a mixture of a zinc halide and a halide of an alkali metal or an alkaline earth metal. In the coagulation bath, water, an aqueous solution of a metal salt, or an organic solvent such as acetone, or methanol may be used.

As the method of drawing the obtained undrawn yarn, a heat drawing method in which the undrawn yarn is drawn by heating to a temperature higher than the glass transition temperature of the undrawn yarn, is preferred. Further, the drawing of the undrawn yarn in the above method (2) may be carried out at one stage, but it is preferable to conduct the multi-stage drawing. The heat drawing method is not particularly restricted, and may adopt a method of running the yarn on, for example, a heat roll or a heat plate, and the like. In this case, the heat drawing temperature is preferably in a range of 110°C to (the melting point of a polyketone), and the total drawing ratio is preferably not less than 10 times.

When the formation of the polyketone fiber is carried out through the method (1), the temperature at the final drawing step of the above-described multi-stage heat drawing is preferred to be in a range of 110°C to (drawing temperature at drawing step just before the final drawing step - 3°C), and the drawing ratio at the final drawing step of the multi-stage heat drawing is preferred to be in a range of 1.01 to 1.5 times. On the other hand, when the formation of the polyketone fiber is carried out through the method (2), the tension applied to the fiber after the heat drawing is preferred to be in a range of 0.5 to 4 cN/dtex, and the cooling rate in the quenching is preferred to be not less than 30°C / second, and the cooling-end temperature in the quenching is preferred to be not higher than 50°C. The quenching method of the heat-drawn polyketone fiber is not particularly restricted, and may adopt conventionally known methods. Specifically, the cooling method using the roll is preferred. Further, the thus obtained polyketone fiber has a large retention in the elastic strain, so that it is preferred that the fiber is usually subjected to a relaxation heat treatment so as to make the length of the fiber shorter than the length of the fiber after the heat drawing. In this case, the temperature of the relaxation heat treatment is preferred to be in a range of 50 to 100°C, and the relaxation ratio is preferred to be in a range of 0.980 to 0.999 times.

In order to best utilize the high heat shrinkage characteristics of the PK fiber cord, it is preferred that the treatment temperature during processing and a temperature of the molded article in use are near the temperature which indicates heat shrinkage stress (maximum heat shrinkage temperature). Specifically, because the processing temperature such as the RFL treatment temperature in the adhesive processing which is performed as required or a vulcanizing temperature is 100 to 250°C, and the temperature of the tire material heated by a repetitive usage or a high-speed rotation reaches 100 to 200°C, the maximum heat shrinkage temperature is preferably in a range of 100 to 250°C, more preferably in a range of 150 to 240°C.

The polyketone fiber of the present invention may be suitably produced by melt spinning of polyketone. Specifically, the melt spinning method described in Japanese Patent Publication No. 2763779 may be adopted. That is, a melt polyketone fiber composed of an alternate-type copolymer of olefin unsaturated hydrocarbon and carbon monoxide (copolymer in which a CO unit and an olefin-derived unit are arranged alternately in the macromolecule) may be obtained as the one with desired characteristics having an excellent combination balance of tensile strength, bending modulus and adhesiveness to rubber, by melt spinning an alternate copolymer of carbon monoxide and an olefin unsaturated hydrocarbon having an average molecular weight of not less than 2000 at a temperature of not lower than (T + 20) K, then drawing the resultant at a temperature of not higher than (T - 10) K (where T is the crystal melting point of the above-described polymer). In this case, the drawing ratio of the drawing is preferably at least 3 : 1, more preferably at least 7 : 1, most preferably 15 : 1. A preferable drawing temperature is lower than the crystal melting point of the polymer by at least 40 K, and a preferable melt spinning temperature is higher than the crystal melting point of the polymer by at least 40 K.

Alternatively, since it is known that melt spinnability is provided when silicon atom is introduced in the molecular chain as described in Japanese Unexamined Patent Application Publication No. 2005-105470, melt spinning may be conducted by using a polyketone produced by the method described in the same publication. That is, a desired polyketone fiber may be obtained by melting a polyketone obtained by reacting ethylene unsaturated compound and carbon monoxide

as well as silicone compound as a third ingredient to extrude from a spinning nozzle, and being drawn while being wound temporarily or not being wound. The obtained polyketone fiber has a tensile strength of not less than 5 cN/detex.

As mentioned above, in order to best utilize the high heat shrinkage characteristics of the PK fiber cord, it is preferred that the treatment temperature during processing and a temperature of the molded article in use are near the temperature which indicates heat shrinkage stress (maximum heat shrinkage temperature), and the maximum heat shrinkage temperature is preferably in a range of 100 to 250°C, more preferably in a range of 150 to 240°C.

The coating rubber which covers the carcass ply cord of the present invention may have a variety of shapes. Representative examples of the shapes include a coating and a sheet. As a coating rubber, known rubber compositions may be suitably adopted and should not be particularly restricted.

The run-flat tire of the present invention may be manufactured by a conventional method by applying the above-mentioned carcass ply as the radial carcass 4. As for the pneumatic tire of the present invention, normal air or an air in which the partial pressure of the oxygen is varied, or an inert gas such as nitrogen may be used as a gas which is filled in the tire.

Examples

In the following, the present invention will be described by way of Examples thereof.

(Preparation Example 1 of PK Fiber: Wet Spinning)

A polyketone polymer having an intrinsic viscosity of 5.3 in which ethylene prepared by a conventional method and carbon monoxide were perfectly alternately copolymerized were added to an aqueous solution containing 65% by mass of zinc chloride / 10% by mass of sodium chloride, and was stirred to be dissolved at a temperature of 80°C for 2 hours, whereby a dope which had a polymer content of 8% by mass was obtained.

The obtained dope was heated to 80°C, and passed through a 20 μm sintered filter. The resultant dope was extruded from a spinning nozzle having 50 holes with 0.10 mm ϕ in diameter heated at 80°C through a 10 mm air gap into 18°C water containing 5% by mass of zinc chloride at a discharge rate of 2.5 cc / min. The extrudate was drawn at 3.2 m / min to produce a coagulated filament.

Subsequently, the coagulated filament was washed in 2% by mass aqueous sulfuric acid solution at 25°C and then in water at 30°C, and was wound as a coagulated yarn at 3.2 m /min.

The coagulated yarn was impregnated with IRGANOX 1098 (manufactured by Ciba Specialty Chemicals K.K.) and IRGANOX 1076 (manufactured by Ciba Specialty Chemicals K.K.) at 0.05% by mass (with respect to polyketone polymer) each. The coagulated yarn was dried at least at 240°C and was treated with a finishing agent to produce undrawn yarn. The heat shrinkage rate may be adjusted by suitably controlling the drying temperature.

The finishing agent had the following composition:

lauryl oleate / bisoxyethyl bisphenol A / polyether (propylene oxide / ethylene oxide = 35 / 65 : molecular weight 20000) / 10-mole polyethylene oxide added oleyl ether / 10-mole polyethylene oxide added castor oil ether / sodium stearylsulfonate / sodium dioctylphosphate = 30 / 30 / 10 /5 / 23 / 1 / 1 (% by mass).

The obtained undrawn yarn was drawn by five steps: 240°C (1st), 258°C (2nd), 268°C (3rd), 272°C (4th), and 200°C at a drawing ratio of 1.08 (drawing tension: 1.8 cN/dtex) (5th), and was wound by a winder. The total drawing ratio of the five-step drawn yarn with respect to the undrawn yarn was 17.1. This fiber original yarn had excellent physical properties: a tensile strength of 15.6 cN/dtex, an elongation of 4.2%, and a modulus of elasticity of 347 cN/dtex. The fiber yarn had a heat shrinkage rate of 1.9% in 150°C x 30 min dry heat treatment. The PK fiber thus obtained was used as a cord in the following conditions.

(Preparation Example 2 of PK Fiber: Melt Spinning)

Fiber brand of alternate copolymer of carbon monoxide, ethylene and 8% by mole of propylene ethylene (PE) based on ethylene was subjected to a melt spinning. The copolymer had a molecular weight of 10,000 to 25,000 and a crystal melting point of 220°C. The melt spinning was conducted at a drawing ratio of 6 : 1. The drawing temperature of the alternate copolymer was set at 207°C and the melt spinning temperature of the alternate copolymer was set at 280°C.

(Examples 1 to 22, Comparative Examples 1 to 4 and Conventional Example)

A cord / rubber complex was prepared by arranging fiber cords having a material, a thickness, a spinning method used, a heat shrinkage stress, a dry heat shrinkage rate, an end count of the polyketone fiber cords at the bead portion, a cord diameter D1 and a single yarn fineness as described in Tables 1 to 3 in parallel, covering with a coating rubber, cutting wefts, and the like. The cord / rubber complex was employed as a carcass ply, and a side reinforcing

type run-flat tire having the structure shown in Fig. 1 and having a size of 215/45ZR17 was test-manufactured. A vertical spring and run-flat durability of the obtained tire were evaluated by the following method and the result shown in Table 3 was obtained.

(1) Vertical Spring

A load-deformation curve of the test tire inflated to an inner pressure of 230 kPa was measured, and a gradient of the tangent at a given load on the obtained load-deformation curve was defined as a vertical spring constant with respect to the load. The vertical spring constant of the test tire was indicated as an index by taking the value of the vertical spring constant of the conventional tire of Conventional Example as 100. The larger the value of the index is, the larger the value of the vertical spring constant.

(2) Run-Flat Durability

A drum test was conducted under a condition having a load of 4.17 kN, a velocity of 89 km / h and a temperature of 38°C without inflating the test tire to determine the travel distance until resulting in a failure of the tire. The travel distance was indicated as an index by taking the travel distance of the tire of Conventional Example until resulting in a failure of the tire as 100. The larger the value of the index is, the longer the travel distance until resulting in a failure of the tire is. The larger index means that the tire excels in run-flat durability.

(3) Tire Uniformity

The RFV (Radial Force Variation) and LFV (Lateral Force Variation) of the test tire inflated to an inner pressure of 230 kPa were determined and each was indicated as an index by taking the value of the vertical spring constant of the tire of Conventional Example as 100. The smaller the index is, the more preferable the uniformity of the tire.

[Table 1]

| | carcass cord | | | | | | |
|---|---|---|---|---|---|---|---|
| | material · thickness | spinning method | heat shrinkage force (cN/dtex) | heat shrinkage rate (%) | end count (cord number /100mm) | cord diameter D1 (mm) | single yarn fineness (dtex) |
| Conventional Example | Rayon 1840dtex/3 | wet spinning | 0.06 | 1.2 | 80 | 0.84 | 2.2 |
| Comparative Example 1 | Rayon 1840dtex/3 | wet spinning | 0.06 | 1.2 | 80 | 0.84 | 2.2 |
| Comparative Example 2 | Rayon 1670dtex/3 | wet spinning | 0.06 | 1.2 | 85 | 0.84 | 2.2 |
| Comparative Example 3 | PK 1670dtex/2 | wet spinning | 0.92 | 2.7 | 95 | 0.73 | 1.6 |
| Example 1 | PK 1670dtex/2 | wet spinning | 0.92 | 2.7 | 95 | 0.73 | 1.6 |
| Example 2 | PK 1670dtex/2 | wet spinning | 0.92 | 2.7 | 95 | 0.73 | 1.6 |
| Example 3 | PK 1670dtex/2 | wet spinning | 0.85 | 2.3 | 95 | 0.73 | 1.6 |
| Example 4 | PK 1670dtex/2 | wet spinning | 0.65 | 1.8 | 95 | 0.73 | 1.6 |
| Example 5 | PK 1670dtex/2 | wet spinning | 0.42 | 1.6 | 95 | 0.66 | 1.6 |
| Example 6 | PK 1670dtex/2 | wet spinning | 0.92 | 2.7 | 95 | 0.73 | 1.6 |
| Example 7 | PK 1670dtex/2 | wet spinning | 0.92 | 2.7 | 95 | 0.73 | 1.6 |
| Example 8 | PK 1670dtex/2 | wet spinning | 0.92 | 2.7 | 95 | 0.73 | 1.6 |
| Comparative Example 4 | PK 1670dtex/2 | wet spinning | 0.92 | 2.7 | 95 | 0.73 | 1.6 |
| Example 9 | PK 1670dtex/2 | wet spinning | 0.92 | 2.7 | 88 | 0.73 | 1.6 |
| Example 10 | PK 2200dtex/2 | wet spinning | 0.94 | 2.9 | 72 | 0.84 | 1.6 |
| Example 11 | PK 1100dtex/2 | wet spinning | 0.91 | 2.5 | 104 | 0.59 | 1.6 |
| Example 12 | PK 1670dtex/2 | wet spinning | 0.85 | 2.3 | 88 | 0.66 | 1.6 |
| Example 13 | PK 2200dtex/2 | melt spinning | 0.6 | 3.5 | 95 | 0.85 | 5.0 |
| Example 14 | PK 1100dtex/2 | melt spinning | 0.4 | 5.5 | 95 | 0.59 | 4.0 |
| Example 15 | PK 1670dtex/2 | melt spinning | 0.38 | 3.2 | 95 | 0.69 | 4.5 |
| Example 16 | PK 1670dtex/2 | melt spinning | 0.45 | 5.1 | 95 | 0.73 | 5.0 |
| Example 17 | PK 1670dtex/2 | melt spinning | 0.5 | 6.0 | 95 | 0.69 | 5.0 |
| Example 18 | PK 1670dtex/2 | melt spinning | 0.5 | 6.0 | 95 | 0.69 | 2.0 |
| Example 19 | PK 1670dtex/2 | melt spinning | 0.5 | 3.0 | 95 | 0.66 | 4.5 |
| Example 20 | PK 1670dtex/2 | melt spinning | 0.45 | 3.3 | 95 | 0.66 | 12 |
| Example 21 | PK 1670dtex/2 | melt spinning | 0.15 | 3.1 | 95 | 0.69 | 1.2 |
| Example 22 | PK 1670dtex/2 | melt spinning | 0.72 | 3.2 | 95 | 0.69 | 16 |

[Table 2]

| | weft | | | | | | | |
|---|---|---|---|---|---|---|---|---|
| | material · thickness | end count (cord number/ 100mm) | Diameter D2 (mm) | cut / no cut | breaking elongation (%) | breaking strength (g) | cut pitch at center portion (mm) | cut pitch at bead portion (mm) |
| Conventional Example | Polynosic 300dtex/1 | 8 | 0.18 | no cut | 12 | 500 | - | - |
| Comparative Example 1 | Polynosic 300dtex/1 | 8 | 0.18 | cut | 12 | 500 | 9.0 | 6.0 |
| Comparative Example 2 | Polynosic 300dtex/1 | 8 | 0.18 | cut | 12 | 500 | 17.6 | 12.4 |
| Comparative Example 3 | Lyocell 300dtex/1 | 8 | 0.18 | no cut | 11 | 600 | - | - |
| Example 1 | Lyocell 300dtex/1 | 8 | 0.18 | cut | 11 | 600 | 9.0 | 6.0 |
| Example 2 | Polynosic 300dtex/1 | 8 | 0.18 | cut | 12 | 500 | 9.0 | 6.0 |
| Example 3 | Polynosic 300dtex/1 | 8 | 0.18 | cut | 12 | 500 | 9.0 | 6.0 |
| Example 4 | Lyocell 300dtex/1 | 8 | 0.18 | cut | 11 | 600 | 9.0 | 6.0 |
| Example 5 | Polynosic 300dtex/1 | 8 | 0.18 | cut | 12 | 500 | 9.0 | 6.0 |
| Example 6 | Cotton 420dtex/1 | 8 | 0.15 | cut | 9 | 550 | 9.0 | 6.0 |
| Example 7 | Lyocell 300dtex/1 | 8 | 0.18 | cut | 11 | 600 | 18 | 12 |
| Example 8 | Polynosic 300dtex/1 | 8 | 0.18 | cut | 12 | 500 | 24 | 16 |
| Comparative Example 4 | high elongation Nylon 300dtex/1 | 8 | 0.15 | cut | 80 | 700 | not uniformly cut | |

| | weft | | | | | | | |
|---|---|---|---|---|---|---|---|---|
| | material · thickness | end count (cord number/ 100mm) | Diameter D2 (mm) | cut / no cut | breaking elongation (%) | breaking strength (g) | cut pitch at center portion (mm) | cut pitch at bead portion (mm) |
| Example 9 | Polynosic 300dtex/1 | 8 | 0.18 | cut | 12 | 500 | 17.3 | 12 |
| Example 10 | Polynsic 400dtex/1 | 5 | 0.21 | cut | 11 | 620 | 57.7 | 41.2 |
| Example 11 | Polynosic 200dtex/1 | 16 | 0.14 | cut | 12 | 390 | 11.5 | 8.2 |
| Example 12 | Polynosic 300dtex/1 | 8 | 0.18 | cut | 12 | 500 | 18.4 | 14 |
| Example 13 | Polynosic 300dtex/1 | 8 | 0.18 | cut | 12 | 500 | 9.0 | 6.0 |
| Example 14 | Polynosic 300dtex/1 | 8 | 0.18 | cut | 12 | 500 | 9.0 | 6.0 |
| Example 15 | Polynosic 300dtex/1 | 8 | 0.18 | cut | 12 | 500 | 9.0 | 6.0 |
| Example 16 | Polynosic 300dtex/1 | 8 | 0.18 | cut | 12 | 500 | 9.0 | 6.0 |
| Example 17 | Polynosic 300dtex/1 | 8 | 0.18 | cut | 12 | 500 | 9.0 | 6.0 |
| Example 18 | Cotton 420dtex/1 | 8 | 0.15 | cut | 9 | 550 | 9.0 | 6.0 |
| Example 19 | Lyocell 300dtex/1 | 8 | 0.18 | cut | 11 | 600 | 9.0 | 6.0 |
| Example 20 | Lyocell 300dtex/1 | 8 | 0.18 | cut | 11 | 600 | 9.0 | 6.0 |
| Example 21 | Polynosic 300dtex/1 | 8 | 0.18 | cut | 11 | 600 | 9.0 | 6.0 |
| Example 22 | Polynosic 300dtex/1 | 8 | 0.18 | cut | 11 | 600 | 9.0 | 6.0 |

[Table 3]

| | reinforcing rubber | tire performance | | | |
|---|---|---|---|---|---|
| | thickness (mm) | vertical stiffness during normal travel (index) | run-flat durability (index) | uniformity (index) | |
| | | | | RFV | LFV |
| Conventional Example | 8.5 | 100 | 100 | 100 | 100 |
| Comparative Example 1 | 8.5 | 100 | 100 | 95 | 98 |
| Comparative Example 2 | 8.5 | 100 | 100 | 95 | 98 |
| Comparative Example 3 | 6.5 | 90 | 9 | 104 | 100 |
| Example 1 | 6.5 | 90 | 200 | 92 | 97 |
| Example 2 | 6.5 | 90 | 200 | 92 | 97 |
| Example 3 | 6.5 | 91 | 180 | 93 | 97 |
| Example 4 | 6.5 | 92 | 160 | 94 | 98 |
| Example 5 | 6.5 | 94 | 140 | 95 | 99 |
| Example 6 | 6.5 | 90 | 200 | 92 | 97 |
| Example 7 | 6.5 | 90 | 200 | 94 | 98 |
| Example 8 | 6.5 | 90 | 200 | 96 | 99 |
| Comparative Example 4 | 6.5 | 90 | 9 | 104 | 101 |
| Example 9 | 6.5 | 90 | 200 | 92 | 97 |
| Example 10 | 6.5 | 94 | 240 | 96 | 99 |
| Example 11 | 6.5 | 86 | 160 | 88 | 92 |
| Example 12 | 6.5 | 91 | 180 | 93 | 97 |
| Example 13 | 6.0 | 90 | 170 | 92 | 97 |
| Example 14 | 6.0 | 90 | 130 | 97 | 97 |
| Example 15 | 6.0 | 94 | 135 | 98 | 98 |
| Example 16 | 6.0 | 92 | 145 | 95 | 97 |
| Example 17 | 6.0 | 91 | 150 | 90 | 96 |
| Example 18 | 6.0 | 90 | 150 | 90 | 97 |
| Example 19 | 6.0 | 90 | 150 | 93 | 97 |
| Example 20 | 6.0 | 90 | 145 | 95 | 97 |
| Example 21 | 6.0 | 90 | 145 | 94 | 97 |
| Example 22 | 6.0 | 90 | 145 | 93 | 98 |

The above-described Table 1 shows that the tire having the configuration of the present invention excels in the uniformity. Further, the above-described Table 1 shows that, by applying a pick breaker treatment, the uniformity of the tire employing the melt spinned PK fiber may be more improved.

## Claims

1. A run-flat tire comprising a left-and-right pair of bead portions (1), a carcass ply extending from a crown portion to the pair of bead portions (1) by way of each of the side portions (2), and a side reinforcing rubber layer (5) having a crescent-shaped meridional cross section which layer extends all over or almost all over the both side portions (2) along the inside of the carcass ply, wherein
the carcass ply cord (10) contains at least 50% by mass of polyketone fibers, has a heat shrinkage force of 0.1 to 1.8 cN/dtex as a cord subjected to a dipping process, and the heat shrinkage rate of the polyketone fiber in a dry heat treatment at a temperature of 150°C for 30 minutes is in a range of 0.3 to 6.5%; wherein
the carcass ply includes a weft (11) which crosses the cords (10) arranged approximately along the radial directions, and the weft (11) is cut at a plurality of points at regular intervals along the tire circumferential direction, and wherein the breaking elongation of the weft (11) is 5 to 20% and the breaking strength of the weft (11) is in a range of 200 to 1000 g.

2. The run-flat tire according to claim 1, wherein the end count of the polyketone fiber cords (10) at the bead portion of the carcass ply is in a range of 70 to 120 cords /100 mm.

3. The run-flat tire according to claim 1, wherein the end count of the weft (11) is in a range of 3 to 20 cords / 100 mm.

4. The run-flat tire according to claim 1, wherein the cord diameter D1 of the carcass ply cord (10) is in a range of 0.45 to 0.95 mm.

5. The run-flat tire according to claim 1, wherein the diameter D2 of the weft (11) is in a range of 0.1 to 0.3 mm.

6. The run-flat tire according to claim 1, wherein the cut pitch A of the weft (11) is 5.5 to 60 times the cord diameter D1.

7. The run-flat tire according to claim 1, wherein as the polyketone fiber included in the fiber cord (10) which forms the carcass ply, the tensile strength of the original fiber is not less than 10 cN/dtex and the modulus of elasticity of the fiber is not less than 60 cN/dtex.

8. The run-flat tire according to claim 1, wherein the weft (11) is composed of cellulosic fiber or vinylon fiber.

9. The run-flat tire according to claim 1, wherein the weft (11) is spun yarn.

## Patentansprüche

1. Run-Flat-Reifen, der aufweist: ein linkes und rechtes Paar von Wulstabschnitten (1); eine Karkassenlage, die sich von einem Zenitabschnitt zum Paar der Wulstabschnitte (1) mittels eines jeden der Seitenabschnitte (2) erstreckt; und eine Seitenverstärkungsgummilage (5) mit einem sichelförmigen Meridionalschnitt, wobei sich die Lage über die gesamten oder fast über die gesamten beiden Seitenabschnitte (2) längs der Innenseite der Karkassenlage erstreckt, wobei
der Karkassenlagenkord (10) mindestens 50 Masse-% Polyketonfasern enthält, eine Wärmeschrumpkngskraft von 0,1 bis 1,8 cN/dtex aufweist, in der Form eines Kords, der einem Tauchprozess unterworfen wird, und wobei die Wärmeschrumpkngsgeschwindigkeit der Polyketonfaser bei einer Trockenwärmebehandlung bei einer Temperatur von 150 °C über 30 Minuten in einem Bereich von 0,3 bis 6,5 % liegt; wobei
die Karkassenlage einen Schuss (11) umfasst, der die Korde (10) kreuzt, die annähernd längs der radialen Richtungen angeordnet sind, und wobei der Schuss (11) an einer Vielzahl von Stellen in regelmäßigen Abständen längs der Reifenumfangsrichtung geschnitten ist, und wobei
die Bruchdehnung des Schusses (11) 5 bis 20 % beträgt und die Reißfestigkeit des Schusses (11) in einem Bereich von 200 bis 1000 g liegt.

2. Run-Flat-Reifen nach Anspruch 1, bei dem die Fadenzahl der Polyketonfaserkorde (10) im Wulstabschnitt der Karkassenlage in einem Bereich von 70 bis 120 Korde/100 mm liegt.

3. Run-Flat-Reifen nach Anspruch 1, bei dem die Fadenzahl des Schusses (11) in einem Bereich von 3 bis 20 Korde/ 100 mm liegt.

4. Run-Flat-Reifen nach Anspruch 1, bei dem der Korddurchmesser D1 des Karkassenlagenkordes (10) in einem Bereich von 0,45 bis 0,95 mm liegt.

5. Run-Flat-Reifen nach Anspruch 1, bei dem der Durchmesser D2 des Schusses (11) in einem Bereich von 0,1 bis 0,3 mm liegt.

6. Run-Flat-Reifen nach Anspruch 1, bei dem der Schnittabstand A des Schusses (11) das 5,5- bis 60-fache des Korddurchmessers D1 beträgt.

7. Run-Flat-Reifen nach Anspruch 1, bei dem, wenn die Polyketonfaser im Faserkord (10) eingeschlossen ist, der die Karkassenlage bildet, die Zugfestigkeit der ursprünglichen Faser nicht kleiner als 10 cN/dtex und der Elastizitätsmodul der Faser nicht kleiner als 60 cN/dtex sind.

8. Run-Flat-Reifen nach Anspruch 1, bei dem der Schuss (11) aus Cellulosefaser oder Vinylonfaser besteht.

9. Run-Flat-Reifen nach Anspruch 1, bei dem der Schuss (11) ein Spinnfasergarn ist.

## Revendications

1. Bandage pneumatique pour roulage à plat, comprenant des parties de paires de talon de gauche et de droite (1), une nappe de carcasse, s'étendant d'une partie de sommet vers la paire de parties de talon (1) par l'intermédiaire de chacune des parties de flanc (2), et une couche de gomme de renforcement des flancs (5), ayant une section transversale méridionale en forme de croissant, cette couche s'étendant sur l'ensemble ou pratiquement sur l'ensemble des deux parties de flanc (2), le long de l'intérieur de la nappe de carcasse ; dans lequel
le câblé de la nappe de carcasse (10) contient au moins 50% en poids de fibres de polycétone, présente une force de rétraction thermique comprise entre 0,1 et 1,8 cN/dtex, sous forme d'un câblé soumis à un processus d'immersion, et le taux de rétraction thermique de la fibre de polycétone, dans un traitement à la chaleur sèche en présence d'une température de 150°C pendant trente minutes, étant compris dans un intervalle allant de 0,3 à 6,5% ; dans lequel
la nappe de carcasse englobe une trame (11) croisant les câblés (10) agencés pratiquement le long des directions radiales, la trame (11) étant coupée au niveau de plusieurs points, à intervalles réguliers le long de la direction circonférentielle du bandage, et dans lequel
l'allongement à la rupture de la trame (11) représente 5 à 20%, la résistance à la rupture de la trame (11) étant comprise dans l'intervalle allant de 200 à 1000 g.

2. Bandage pneumatique pour roulage à plat selon la revendication 1, dans lequel le compte de fils des câblés de fils de polycétone au niveau de la partie de talon de la nappe de carcasse (10) est comprise dans un intervalle allant de 70 à 120 câblés/100 mm.

3. Bandage pneumatique pour roulage à plat selon la revendication 1, dans lequel le compte de fils de la trame (11) est compris dans l'intervalle allant de 3 à 20 câblés/100 mm.

4. Bandage pneumatique pour roulage à plat selon la revendication 1, dans lequel le diamètre de câblé D1 du câblé de la nappe de carcasse (10) est compris dans un intervalle allant de 0,45 à 0,95 mm.

5. Bandage pneumatique pour roulage à plat selon la revendication 1, dans lequel le diamètre D2 de la trame (11) est compris dans un intervalle allant de 0,1 à 0,3 mm.

6. Bandage pneumatique pour roulage à plat selon la revendication 1, dans lequel le pas de coupe A de la trame (11) représente 5,5 à 60 fois le diamètre du câblé D1.

7. Bandage pneumatique pour roulage à plat selon la revendication 1, dans lequel, en ce qui concerne la fibre de polycétone incluse dans le câblé de fibres (10) formant la nappe de carcasse, la résistance à la traction de la fibre originale n'est pas inférieure à 10 cN/dtex, le module d'élasticité de la fibre n'étant pas inférieur à 60 cN/dtex.

8. Bandage pneumatique pour roulage à plat selon la revendication 1, dans lequel la trame (11) est composée de fibres de cellulose ou de fibres de vinylon.

**9.** Bandage pneumatique pour roulage à plat selon la revendication 1, dans lequel la trame (11) est constituée par un fil filé.

Fig.1

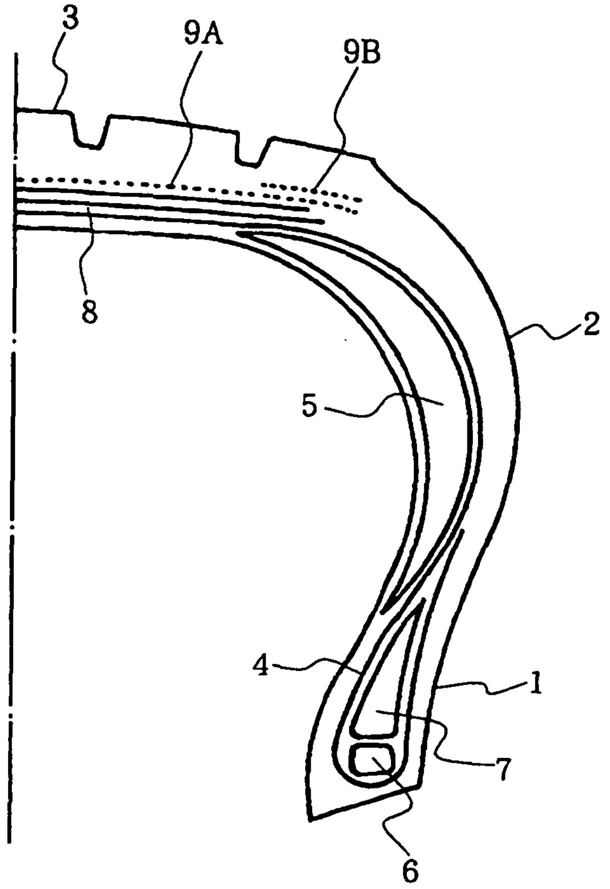


Fig.2

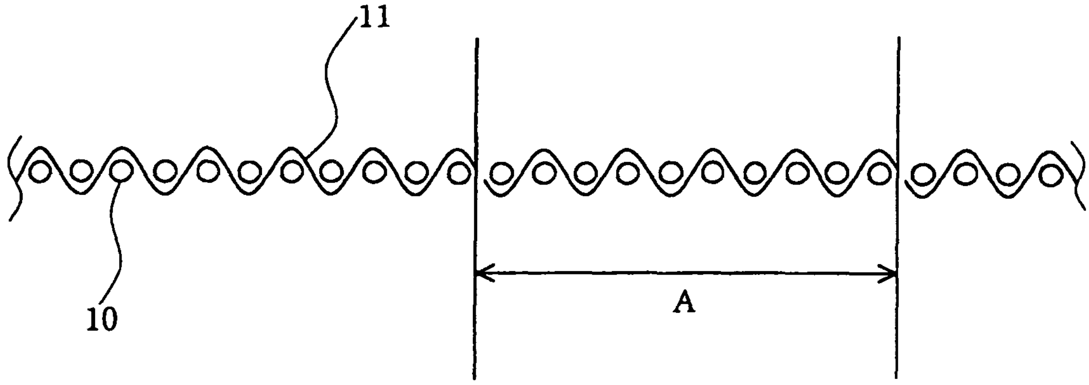

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000264012 A
- JP 2002500587 PCT
- JP 2002500589 PCT
- JP 2004306658 A
- JP 2006224952 A
- EP 1557299 A
- JP 2004142426 A
- JP H05208458 B
- JP H02112413 B
- JP H04228613 B
- JP H04505344 PCT
- WO 9918143 A
- WO 0009611 A
- JP 2001164422 A
- JP 2004218189 A
- JP 2004285221 A
- JP 2763779 B
- JP 2005105470 A